# EUROPEAN PATENT SPECIFICATION

(11) **EP 2 130 311 B1**
(45) Date of publication and mention of the grant of the patent: **11.09.2013**
(21) Application number: 08723680.8
(22) Date of filing: 24.03.2008
(51) Int. Cl.: H04B 7/26, H04W 36/00, H04L 29/06

(54) **HANDOVER APPARATUS AND METHOD IN A HETEROGENEOUS WIRELESS COMMUNICATION SYSTEM**
VORRICHTUNG UND VERFAHREN ZUR ÜBERGABE IN EINEM HETEROGENEN DRAHTLOSEN KOMMUNIKATIONSSYSTEM
APPAREIL ET PROCÉDÉ DE TRANSFERT INTERCELLULAIRE DANS UN SYSTÈME DE COMMUNICATION SANS FIL HÉTÉROGÈNE

(30) Priority: 23.03.2007 KR 20070028912
(43) Date of publication of application: 09.12.2009
(73) Proprietor: Samsung Electronics Co., Ltd., Suwon-si, Gyeonggi-do, 443-742 (KR); Industry-Academic Cooperation Foundation, Yonsei University, Seodaemun-gu Seoul 120-749 (KR)
(72) Inventor: BAE, Eun-Hui, Seoul 151-832 (KR); CHOI, Sung-Ho, Suwon-si Gyeonggi-do 443-380 (KR); SONG, O-Sok, Suwon-si Gyeonggi-do 443-738 (KR); YEOUM, Tae-Sun, Seoul 121-767 (KR); LIM, Han-Na, Siheung-si Gyeonggi-do 429-907 (KR); LEE, Jai-Yong, Seoul 120-749 (KR); JUNG, Hyun-Duk, Seoul 120-749 (KR); KIM, Kyung-Min, Seoul 120-749 (KR)
(74) Representative: Gover, Richard Paul
(86) International application number: PCT/KR2008/001644
(87) International publication number: WO 2008/117966

(56) References cited:
- WO-A1-2006/123916
- WO-A1-2006/126958
- WO-A2-2006/138736
- US-A1- 2006 239 229
- US-A1- 2006 246 903
- US-A1- 2007 036 109
- US-A1- 2007 041 367
- 3GPP SA WG2: "3rd Generation Partnership Project; Technical Specification Group Services and System Aspects; 3GPP System Architecture Evolution: Report on Technical Options and Conclusions (Release 7) Version 1.2.3", 3RD GENERATION PARTNERSHIP PROJECT (3GPP); TECHNICAL REPORT (TR), XX, XX, vol. 23.882, no. v1.2.3, 1 June 2006 (2006-06-01), page 127, XP002418664,
- "3rd Generation Pertnership Project; Technical Specification Group Services and System Aspects; Voice Call Continuity between CS and IMS Study (Release 7)", 3RD GENERATION PARTNERSHIP PROJECT (3GPP); TECHNICAL REPORT (TR), XX, XX , no. 3GPP TR 23.806 V1.2.9 (2005-07) 31 July 2005 (2005-07-31), pages 1-116, XP002486356, Retrieved from the Internet: URL:http://www.3gpp.org/FTP/Specs/html-inf o/23806.htm [retrieved on 2005-07-31]
- "3rd Generation Partnership Project; Technical Specification Group Services and System Aspects; Voice Call Continuity (VCC) between Circuit Switched (CS) and IP Multimedia Subsystem (IMS); Stage 2 (Release 7)", 3GPP STANDARD; 3GPP TS 23.206, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.2.0, 1 March 2007 (2007-03-01), pages 1-36, XP050363128,
- NGUYEN-VUONG Q., FIAT L., AGOULMINE N.: 'An Architecture for UMTS-WIMAX Interworking' THE 1ST INTERNATIONAL WORKSHOP ON BROADBAND CONVERGENCE NETWORKS 2006 (BCN 2006) 07 April 2006, pages 1 - 10, XP031101752

## Description

### BACKGROUND OF THE INVENTION

### 1. Field of the Invention

The present invention relates generally to a handover apparatus and method in a wireless communication system, and in particular, to a handover apparatus and method in a heterogeneous wireless communication system.

### 2. Description of the Related Art

Wireless communication systems have been developed to allow users to communicate, regardless of location. Such wireless communication systems are evolving from early systems that provide only simple voice communication services into advanced systems capable of providing high-speed data services, packet-based Voice-over-Internet Protocol (VoIP) services, etc.

Wireless communication systems are increasingly being developed, from Circuit Switching (CS) systems that provide basic voice services and lower-speed data services, into advanced systems that provide high-speed packet data services. Among the wireless communication systems, CS-based systems include the 2^{nd} Generation (2G) system and the 3^{rd} Generation (3G) system. The 3G system can provide higher-speed data services than the 2G system. However, due to a need for a system more advanced than the 2G or 3G systems in order to meet the increasing user demand for super high-speed data services, research and development is being conducted on the Long Term Evolution/Service Architecture Evolution (LTE/SAE) system.

The wireless communication systems provide services through a plurality of base stations since they should secure mobility of users. Therefore, handover from a particular base station to another base station may frequently occur while the users do not perceive the handover. For example, if a user receiving a service from a particular base station communicates while moving, the user will continuously receive the service from another base station during and after handover. The procedure for transferring the ongoing call from a particular base station to another base station regardless of movement of the user is called 'handover'. This handover technology is a very common technology in the wireless communication systems.

While the currently available wireless communication systems are 2G/3G-based systems, future available wireless communication systems will be LTE/SAE-based systems. Generally, all of the wireless systems cannot be replaced simultaneously, i.e., it is very difficult to replace all base stations and their upper layer nodes from the 2G/3G system to the LTE/SAE system.

Therefore, there is a possible case where the 2G/3G system and the LTE/SAE system may be used together. Even in this case, handover should be applied to all users in common, to remove inconveniences to users. However, the 2G/3G system provides the voice services using the CS scheme. The CS scheme assigns a fixed communication line between users desiring to make a voice call. That is, in the CS scheme, a voice signal is transmitted through a CS call. On the other hand, the LTE/SAE system is a network where all services use Packet Switching (PS) scheme. Therefore, the LTE/SAE system provides voice services based on VoIP using an IP Multimedia Subsystem (IMS).

In such cases where different systems coexist, the handover scheme from the LTE/SAE system to the CS system or from the CS system to the LTE/SAE system can be roughly classified into a scheme of performing handover so as to allow a user to receive signals from different networks using two radio channels, and a scheme of performing handover using only one radio channel. Both of the two schemes need a method for switching the existing call to another call in order to provide handover of a terminal in the system.

The two-radio channel based scheme should provide each terminal with its own associated radio channel elements, causing an increase in the cost of the terminal. From the standpoint of the terminal, the one-radio channel based scheme is more efficient than the two-radio channel based scheme. However, no method has been proposed yet in which a terminal using only one radio channel supports handover. Therefore, there is a demand for a method for performing handover to the CS system in a terminal that uses only one radio channel and is receiving a call from the LTE/SAE system.

3GPP SA WG2: "3rd Generation Partnership Project; Technical Specification Group Services and System Aspects; 3GPP System Architecture Evolution: Report on Technical Options and Conclusions (Release 7) Version 1.2.3", 3RD GENERATION PARTNERSHIP PROJECT (3GPP); TECHNICAL REPORT (TR), vol. 23.882, no. v1.2.3, 1 June 2006 discloses a framework for an evolution or migration of a 3GPP system to a higher-data-rate, lower-latency, packet-optimized system that supports, multiple RATs.

US-2007/041367-A1 discloses a method for maintaining calls during transfers between different types of subsystems, even when there is a bearer path interruption at the user element due to the original connection from the transferring-out subsystem being dropped before the new connection in the transferring-in subsystem is established. The call signaling leg toward the remote endpoint of the remote party is held, while the call signaling leg toward the user element is moved from the transferring-out subsystem to the transferring-in subsystem and a new bearer path is established via the transferring-in subsystem. During transfers with a bearer path interruption, a portion of the bearer path leading to the remote endpoint may be connected to a media resource function, which will provide an announcement to the remote party. Once the user element is accessible in the transferring-in subsystem, the bearer path is further transferred to the user element via the transferring-in subsystem.

"3rd Generation Partnership Project; Technical Specification Group Services and System Aspects; Voice Call Continuity between CS and IMS Study (Release 7)", 3RD GENERATION PARTNERSHIP PROJECT (3GPP); TECHNICAL REPORT (TR), no. 3GPP TR 23.806 V1.2.9 31 July 2005, pages 1-116 contains the results of the feasibility study into the architectural requirements and alternatives for active voice call continuity between the Circuit Switched (CS) domain and the IP Multimedia Subsystem (IMS). Considerations include overall requirements, architectural requirements, evaluation of potential architectural solutions and alternative architectures.

### SUMMARY OF THE INVENTION

An aim of embodiments of the present invention is to address at least the problems and/or disadvantages described above and to provide at least the advantages described below. Accordingly, an aim of an embodiment of the present invention is to provide an apparatus and method for performing call handover between different systems.

Another aim of an embodiment of the present invention is to provide an apparatus and method for, when a simultaneous access to an LTE system and a CS system is unavailable, performing a call handover.

Further another aim of an embodiment of the present invention is to provide an apparatus and method for preventing a possible call drop which may occur due to the movement between different wireless communication systems.

According to a first aspect of the present invention, there is provided a handover method between heterogeneous networks, in which a call manager of a network having a Circuit Switching (CS) network supporting a CS call, a Long Term Evolution (LTE) network supporting a packet call, and an Internet Protocol Multimedia Subsystem (IMS) network for anchoring a call, provides handover from the CS network to the LTE network to a terminal that uses one radio channel and can access either the CS network or the LTE network. The handover method includes establishing at the call manager a bearer to a base station of the LTE network upon receiving at the call manager a handover request to the base station of the LTE network from the terminal via a node of the CS network; receiving at the call manager an assigned IP address that the terminal will use in the LTE network, storing at the call manager information on the terminal, and then registering at the call manager the terminal in the IMS network; and storing the registration result, and sending a handover response signal from the call manager to the terminal via the CS network so that the terminal performs handover from the CS network to the LTE network.

According to a second aspect of the present invention, there is provided a call management system for providing handover from a Circuit Switching (CS) network to a Long Term Evolution (LTE) network by a terminal in a network, the terminal having one radio channel such that the terminal can access either the CS network or the LTE network, the CS network being adapted to support a CS call, the LTE network being adapted to support a packet call, and an Internet Protocol Multimedia Subsystem (IMS) network being adapted to anchor a call. The call management system includes a first interface adapted to exchange data and a control signal with the CS network; a second interface adapted to exchange data and a control signal with the LTE network; a third interface adapted to exchange data and a control signal with the IMS network; and a controller adapted to establish a bearer to a base station of the LTE network using the second interface upon receiving a handover request to the base station of the LTE network from the terminal via the first interface; adapted to receive an assigned IP address of the terminal via a System Architecture Evolution (SAE) anchor of the LTE network, store information on the terminal, and then register the terminal in the IMS network; and adapted to store the registration result, and send a handover response signal to the terminal via the first interface.

### BRIEF DESCRIPTION OF THE DRAWINGS

The above and other aspects, features and advantages of the present invention will become more apparent from the following detailed description when taken in conjunction with the accompanying drawings in which:
FIG. 1 is a conceptual diagram illustrating a combined configuration of a CS system and nodes necessary for a case where a voice call is connected in an LTE/SAE system;
FIG. 2 is a conceptual diagram illustrating a combined configuration of an LTE/SAE system and nodes necessary for a case where a voice call is connected in a CS system;
FIG. 3A is a block diagram illustrating a structure of a call manager according to a preferred embodiment of the present invention;
FIG. 3B is a function diagram of a call manager according to a preferred embodiment of the present invention;
FIGs. 4A to 4D are flowcharts illustrating function switching of a call manager during a handover from an LTE/SAE VoIP call to a GSM/WCDMA CS call according to an embodiment of the present invention;
FIG. 5 is a signaling diagram of a process in which a terminal generates a CS call through a CS network according to an embodiment of the present invention;
FIGs. 6A and 6B are signaling diagrams for a handover from a CS call to an LTE/SAE VoIP call according to an embodiment of the present invention.

### DETAILED DESCRIPTION OF THE PREFERRED EMBODIMENTS

Preferred embodiments of the present invention will now be described in detail with reference to the accompanying drawings. In the following description, a detailed description of known functions and configurations incorporated herein has been omitted for clarity and conciseness. Terms used herein are defined based on functions in the present invention and may vary according to users, operators' intention or usual practices. Therefore, the terms should be defined according to made based on contents of the specification.

Before a description of the present invention is given, a description will be made of a process of connecting a traffic path and a control signal path between nodes for each of the case where a voice call is connected in a Long Term Evolution/Service Architecture Evolution (LTE/SAE) system and the case where a voice call is connected in a Circuit Switching (CS) system.

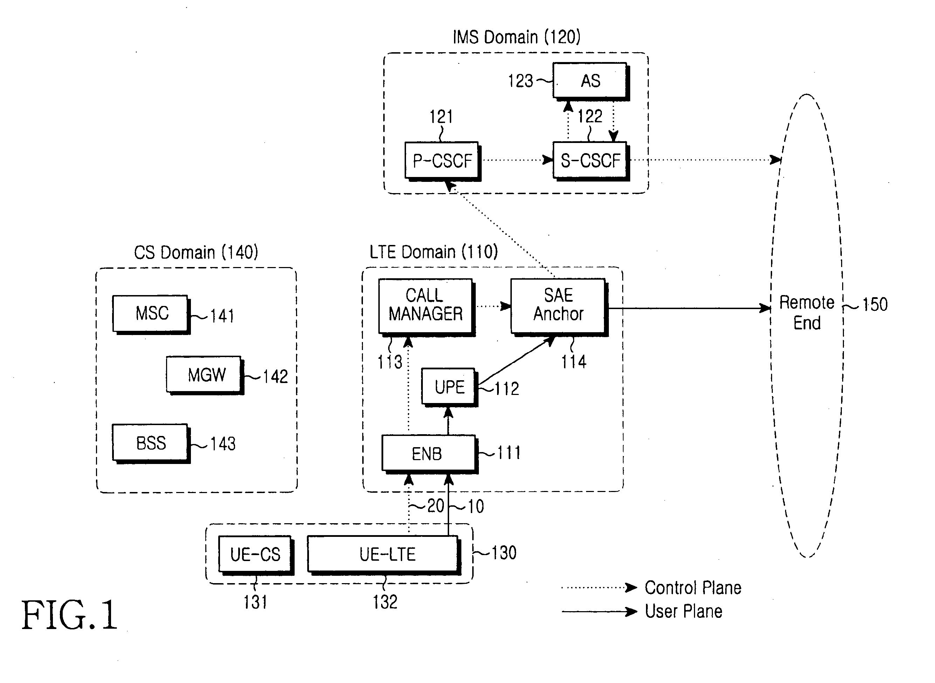

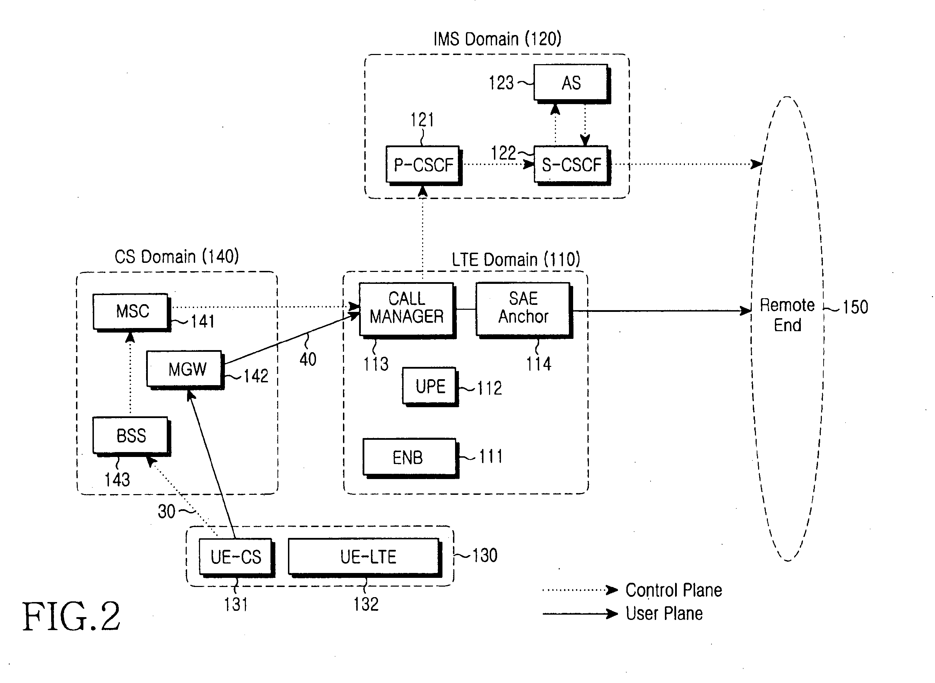

FIG. 1 is a conceptual diagram illustrating a combined configuration of a CS system and nodes necessary for a case where a voice call is connected in an LTE/SAE system, and FIG. 2 is a conceptual diagram illustrating a combined configuration of an LTE/SAE system and nodes necessary for the case where a voice call is connected in a CS system.

Referring to FIGs. 1 and 2, the combined configuration roughly includes an LTE/SAE domain 110, an IMS domain 120, a CS domain 140, a calling terminal (transmitting terminal) 130, and another terminal (called terminal or remote end), i.e., a receiver 150, for making communication with the calling terminal 130. A brief description will now be made of nodes of each domain. It is assumed that the calling terminal 130 has both a UE-CS function 131 for making access to a CS system and a UE-LTE/SAE function 132 for making access to an LTE/SAE system.

The LTE/SAE domain 110 includes a base station 111, or Enhanced Node B (ENB), for making communication with the terminal 130 over a radio channel, and since LTE/SAE basically provides all data in the IP packet form or the packet form, IP packet data or packet data is transmitted between the ENB 111 and the terminal 130. Both the IP packet data and the packet data will be referred to herein as a "packet". The ENB 111 is connected to a User Plane Entity (UPE) 112 located in an upper layer of the ENB 11, and the UPE 112 is connected to a System Architecture Evolution (SAE) Anchor 114. Therefore, the user data transmitted by the calling terminal 130 is transmitted to the receiver 150 located in the remote place via the ENB 111, the UPE 112, and the SAE Anchor 114.

The calling terminal 130, while communicating over the LTE/SAE domain 110 in the manner described above, transmits packet data and a control signal for a call is delivered to the IMS domain 120. The packet data is herein assumed to be a voice call data transmitted via VoIP. In this case, regarding a flow of a control signal for a VoIP call, a control signal of the calling terminal 130 is delivered to the IMS domain 120 via the ENB 111, a call manager 113, and the SAE Anchor 114. Thereafter, the control signal for a VoIP call is transferred to an Application Server (AS) 123 via Call Session Control Functions (CSCFs) 121 and 122 of the IMS domain 120. Therefore, the VoIP call control signal, under the control of the AS 123, is provided to the receiver 150 located in a remote place via the Serving-Call Session Control Function (S-CFCF) 122.

The CS domain 140, as is well known, includes a Mobile Switching Center (MSC) 141, a Media Gateway (MGW) 142, and a Base Station Subsystem (BSS) 143.

Communication achieved through an LTE/SAE system with the foregoing structure, when a voice call is set up in the calling terminal 130, is described below.

The IMS domain 120 provides communication services over a non-fixed path using IP packets, and a VoIP voice message based on the IMS domain 120 is transmitted through an IMS session. Therefore, the AS 123 performs anchoring on both a CS call and a VoIP call, which occur in a CS network and an LTE/SAE network, respectively. The CS call is delivered to the IMS domain 120 after undergoing a Customized Application of Mobile Enhanced Logic (CAMEL) process in the MSC 141. A detailed description thereof will be given below.

The IMS domain 120 provides IP packet-based services over a non-fixed path, and a VoIP voice message based on the IMS domain 120 is transmitted through an IMS session. The AS 123 performs anchoring on both a CS call and a VoIP call, which occur in the CS network and the LTE/SAE network, respectively. The MSC 141 supporting the CS call service acquires address information for making routing from the CS domain 140 to the IMS domain 120 through a CAMEL process; and based on the address information, the MSC 141 delivers an Integrated Services digital network User Part Initial Address Message (ISUP IAM) message to a Media Gateway Control Function (MGCF) (not shown) of the IMS domain 120. The ISUP IAM message delivered to the MGCF is delivered to the AS 123 via the S-CSCF 122 after being converted into a Session Initiation Protocol (SIP) INVITE request. Upon receiving the SIP INVITE request, the AS 123 delivers an SIP INVITE request to a called party after performing anchoring on the corresponding CS call.

When the calling terminal 130 issues a request for a VoIP call over an IMS network, an SIP INVITE request is provided to the Proxy-Call Session Control Function (P-CSCF) 121 which is the first IMS entry entity connecting the IMS network to a General Packet Radio Service (GPRS) network. Then the P-SCSF 121 forwards the SIP INVITE request to the AS 123 via the S-CSCF 122 for providing a particular service to a user based on subscriber information of the user. The S-CSCF 122 takes charge of authentication and service subscription information management for providing a particular service to a user, call control, etc. Similarly to the CS call, the AS 123 performs anchoring on the corresponding VoIP call and then delivers an SIP INVITE request to the called party. As described above, both the CS call and the LTE/SAE VoIP call are controlled by the AS 123 of the IMS domain 120.

FIGs. 1 and 2 show a VoIP call and a CS call, which both undergo anchoring by the AS 123. A control signal 20 for a VoIP call is transmitted by the UE-LTE/SAE function 132 and then delivered to the IMS domain 120 via the LTE/SAE domain 110. Thereafter, the control signal 20 for a VoIP call is delivered to the receiver 150 via the S-CSCF 122 after undergoing anchoring to the AS 123 via the P-CSCF 121 and the S-CSCF 122 of the IMS domain 120. At this point, voice data 10 is delivered to the SAE Anchor 114 via the ENB 111 and the UPE 112, and then delivered to the receiver 150 over an IP network.

A control signal 30 for a CS call is delivered from the UE-CS function 131 to the S-CSCF 122 via the MSC 141, and a Mobility Management Entity (MME) and an MGCF function (both not shown and described below) of the call manager 113, and the S-CSCF 122 sends this signal to the AS 123, performing anchoring. Thereafter, the AS 123 sends a call control signal to the receiver 150, completing the call. At this point, voice data 40 is delivered to the SAE Anchor 114 via the MGW 142 of the CS domain 140 and the call manager 113, and then delivered to the receiver 150 over the IP network.

As assumed above, presently, the terminal 130 can use both the CS system and the LTE/SAE system. However, the terminal 130 has a limitation in simultaneously accessing the two types of networks: the CS system and the LTE/SAE system, i.e., the terminal 130 cannot access the CS system while in communication with the LTE/SAE system, and cannot access the LTE/SAE system while in communication with the CS system. This is because the terminal 130 has only one radio processor, and therefore the terminal 130 can use only one radio channel.

When simultaneous access to the CS system and the LTE/SAE system is unavailable in this way, it is not possible to support handover between the VoIP call and the CS call. A description will now be given of an occurrence of problems where handover between the VoIP call and the CS call cannot be supported.

A Voice Call Continuity (VCC) technology has been proposed by 3GPP TS23.206 as a technology for supporting handover between a VoIP call and a CS call. However, in TS23.206, both of the calls, as described above, undergo anchoring in a VCC Application, which is an IMS AS 123. In TS23.206, however, the terminal is assumed to be a Dual Radio terminal that can make simultaneous access to the CS system and a Packet Switching (PS) system. Therefore, for example, when the terminal intends to perform a handover to a VoIP call of the IMS network, over the PS system, while maintaining the existing CS call over the CS system, the terminal uses a method of generating a new session through the IMS network using a radio channel allocated for an access to the PS system, and then, if the generation of the new session is completed, releasing the existing CS call being continued through the existing CS system. Therefore, if the terminal cannot simultaneously access to different networks of the CS system and the PS system as assumed herein, the terminal cannot apply the VCC solution based on Dual Radio defined in 3GPP TS23.206. Accordingly, there is a need for a method for supporting handover to the LTE/SAE system when the Single Radio-based terminal needs the handover while receiving the CS call.

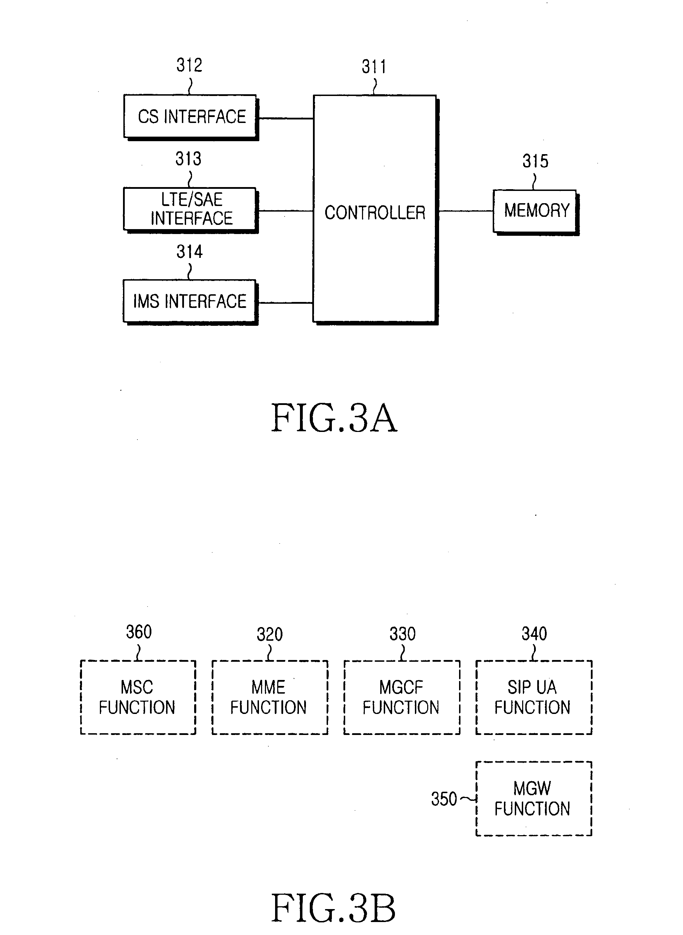

FIG. 3A is a block diagram illustrating a structure of a call manager according to a preferred embodiment of the present invention, and FIG. 3B is a function diagram of a call manager according to a preferred embodiment of the present invention. With reference to FIGs. 3A and 3B, a description will now be made of an operation of a call manager and each function thereof.

A call manager 113 according to the present invention can exchange control signals and user data with a CS domain 140, an IMS domain 120 and an LTE/SAE domain 110. Therefore, the call manager 113 includes a CS interface 312 for interfacing with nodes of the CS domain 140, an LTE/SAE interface 313 for interfacing with nodes of the LTE/SAE domain 110, and an IMS interface 314 for interfacing with nodes of the IMS domain 120. Further, the call manager 113 has a controller 311 for processing signals received from the interfaces 312, 313 and 314. The controller 311 receives user data and/or control signals from a specific domain through a particular interface, and providing the received user data and/or control signals to the same domain or different domains. For such a process, the controller 311 includes a routing function, a switching function, a message conversion function, etc. A description of such actual functions will be given with reference to the function diagram of FIG. 3B. In addition, the call manager 113 includes a memory 315. The memory 315 has an area for storing control information for processing each function, an area for storing data generated during the control operation, an area for storing information on the terminal, and an area for storing various data.

The call manager 113 has, for example, five functions. An MSC function 360 is a function of exchanging information with an MSC 141 of the CS domain 140, for Single Radio Session Continuity (SRSC). Therefore, the MSC function 360 can be used for performing inter-MSC handover. An MME function 320 is a function of performing management on mobility of the terminal. An MGCF function 330 serves as a gateway function for converting an ISUP message into an SIP message, like the MGCF function (not shown) in the IMS domain 120.

An SIP User Agent (UA) function 340 serves as an SIP UA function for allowing the network to perform a part of SIP signaling that the terminal will perform, on behalf of the terminal, for SRSC. Finally, the call manager 113 includes an MGW function 350, and the MGW function 350 serves as an MGW function for providing a data path for delivering the user data provided over the IP network to the CS network. As described above, according to the present invention, the call manager 113 its operation with the MGCF function 330. Regarding the MGCF function 330, the call manager 113, as it is co-located with MGCF in the existing IMS network, includes an IP Multimedia-Media GateWay (IM-MGW) function for providing a connection between a data transmission path of the IP network and a transmission path of the CS network.

A detailed description will now be made of an operation in each of the functions.

The call manager 113 having the foregoing structure performs the following operation. In the handover process from the CS call to the LTE/SAE VoIP call, the call manager 113 establishes (sets up) a data path (or bearer) to the terminal in cooperation with the ENB 111 after switching to the MSC function 360 for internally performing a function of MSC upon receiving a handover request message from the MSC 141. Herein, the MSC function (MSC mode) 360 means a function for performing the same function as the MSC 141 in the CS domain 140. According to the present invention, the call manager 113 analyzes a type of a received message, and if the received message is a CS control message, switches to the MSC function 360, in order to perform the inter-MSC handover process defined by the existing Global System for Mobile communications (GSM)/Wideband Code Division Multiple Access (WCDMA) by operating with the MSC function 360. After completing the establishment for the data transmission path (bearer) for delivering an inter-MSC voice call by operating with the MSC function 360, the call manager 113 switches to the SIP UA function (or SIP UA mode) 340.

After switching to the SIP UA function 340, the call manager 113 starts to prepare for IMS registration of the terminal. The SIP UA function 340 of the call manager 113 is assigned an IP address that the terminal will use, in cooperation with the SAE Anchor 114 which is an entity in charge of IP address assignment for the terminal, in the LTE/SAE network 110. This is possible by performing a process in which the call manager 113 is actually assigned an IP address from the SAE Anchor on behalf of the UE, while operating with the UA function. The call manager 113 generates an IP Multimedia Public Identity (IMPU) and an IP Multimedia Private Identity (IMPI) necessary for performing IMS registration on behalf of the terminal while call manager 113 operates with the SIP UA function 340 on behalf of the terminal using International Mobile Subscriber Identity (IMSI) information of the terminal, acquired through the handover request message provided from the MSC 141 of the CS network 140 in the process of operating with the MSC function 360. The method of generating IMPU/IMPI from the IMSI information is assumed to follow the technology defined by the existing IMS. If the information necessary for registration is generated in this way, the SIP UA function 340 of the call manager performs IMS registration on behalf of the terminal by sending an SIP REGISTER request to the S-CSCF 122 via the P-CSCF 121. When the IMS registration is completed, the call manager 113 stores S-CSCF information to be assigned to the terminal and credential information necessary for services, included in a 200 OK message, which is a response message to the REGISTER request, and then switches to the MSC function 360. After switching to the MSC function 360, the call manager 113 sends, to the MSC 141 of the CS network from which the handover request has been received, a PREPARE HANDOVER response message indicating that the handover-target network has been prepared to provide the service to the terminal.

Upon receiving from the network an Indication instructing its move to the target network, the terminal performs an operation for releasing a radio connection to the current network and moving to the target network to generate a radio connection to a Radio Network Control Entity (RNCE) of the target network, and generates a radio control link to the RNCE. After successfully completing the connection of the radio link to the target network, the terminal performs a process for establishing a connection necessary for control signaling and data exchange with a Core Network Control Entity (CNCE) of the target network. This process corresponds to a similar process to the Packet Data Protocol (PDP) Context Activation process of WCDMA/GPRS. The present invention considers a specific process in the LTE/SAE system having the same purpose as the PDP Context Activation process of WCDMA/GPRS. That is, even though the above process is replaced with an operation in the LTE/SAE system, performed by a process having a different name from the PDP Context Activation process, the gist of the technology described herein will not be damaged.

Upon receipt of the PDP Context Activation request, the call manager 113 operates with the MME function 320 of the LTE/SAE network 110. In the call manager 113 with the default MME function 320, the SIP UA function 340 delivers, to the terminal, information on a Serving GPRS Support Node (SGSN) assigned to the terminal and credential information for services, which have been stored through an IMS registration process, on behalf of the terminal. This information is information acquired by the completion of IMS registration, and can be transmitted to the terminal using a PDP Context Activation Response message.

A description will now be made of function switching of the call manager 113 according to the present invention, a control process based thereon, and a signal flow for handover between other nodes.

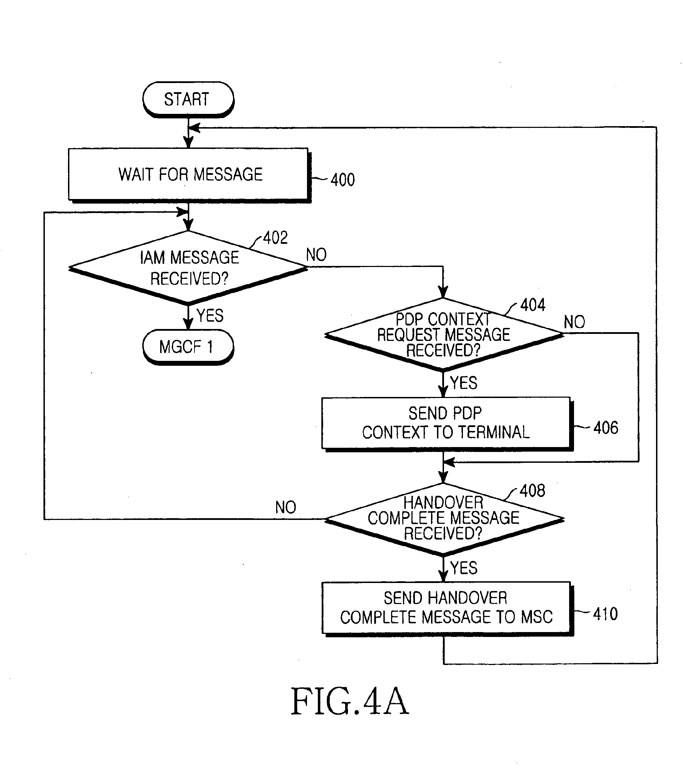

FIGs. 4A to 4D are flowcharts illustrating an operation of a call manager during handover from an LTE/SAE VoIP call to a GSM/WCDMA CS call according to an embodiment of the present invention.

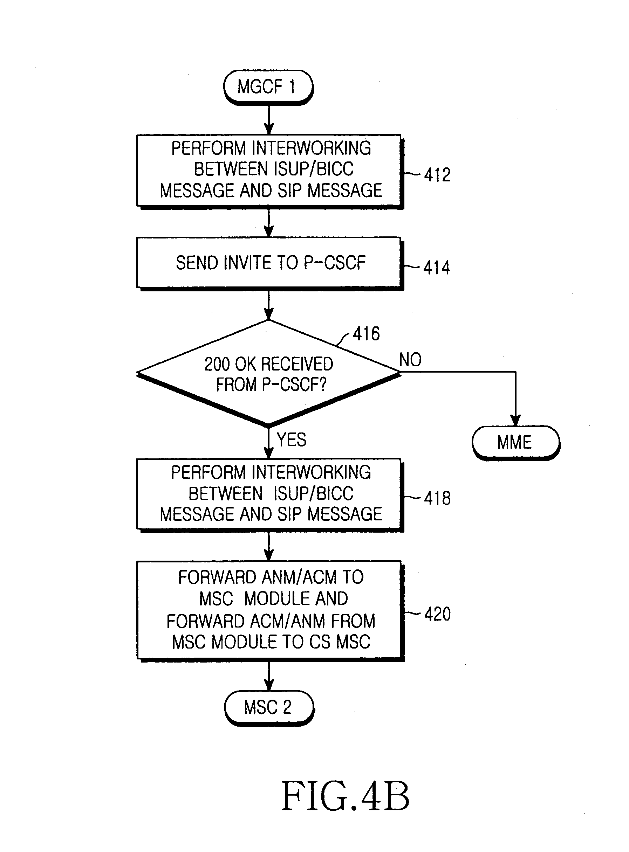

It is assumed that an initial function for an operation of the call manager 113 is a default MME function 320. If the call manager 113, which was waiting for a message with the default MME function 320, receives the message, the call manager 113 analyzes a type of the received message, thereby switching to the function necessary for processing each message. That is, upon receiving a message, the call manager 113 determines in step 402 whether the received message is an IAM message received from the MSC of a 2G/3G-based CS network. If it is determined in step 402 that the received message is an IAM message, the call manager 113 performs a process necessary for routing the IAM message to the IMS network (a detailed description thereof is omitted, since it is not related to the present invention), and based on the acquired routing information, the call manager 113 switches the received IAM message to the MGCF function 330. After switching to the MGCF function 330, the call manager 113 operates according to the process described in FIG. 4B.

However, if it is determined in step 420 that the received message is not an IAM message, the call manager 113 determines in step 404 whether the received message is a PDP Context Activation request message. If it is determined in step 404 that the received message is a PDP Context Activation request message, the call manager 113 proceeds to step 406. However, if it is determined through steps 402 and 404 that the received message is neither the IAM message nor the PDP Context Activation request message, the call manager 113 proceeds to step 408.

In step 406, the call manager 113 performs a PDP Context Activation process, while operating with the MME function 320, or a default function. After completing the PDP Context Activation process, the call manager 113 operating with the default MME function 320 delivers the PDP Context Activation result to the terminal. The PDP Context Activation process includes even the process of delivering the information acquired as a result of IMS registration performed in the call manager 113 operating with the SIP UA function 340 described in FIG. 3B. After sending the PDP Context Activation Response message to the terminal, the call manager 113 waits for a handover complete message indicating the completion of the entire handover process, from the terminal. If the received message is a handover complete message rather than an IAM message nor a PDP Context Activation request message, the call manager 113 determines in step 408 whether a handover complete message is received. If it is determined that a handover complete message is received, the call manager 113, while operating with the MSC function 360 for inter-MSC communication, sends the handover complete message to the MSC 141 of the CS network 140 in step 410, and then switches to a waiting state for receiving other messages. Upon failure to receive the handover complete message, the call manager 113 operates with the MME function 320 which corresponds to the message waiting state.

If it is determined in step 402 that the received message is an IAM message, the call manager 113 switches to the MGCF function 330. A process of operating with the MGCF function 330 will now be described with reference to FIG. 4B.

The call manager 113 operating with the MGCF function 330 converts the received IAM message into an SIP INVITE message. Interworking between the SIP message and ISDN User Part/Bearer Independent Call Control (ISUP/BICC) message, which is a CS message, is assumed to follow the existing technology defined by 3GPP. The call manager 113 operating with the MGCF function 330 sends the SIP INVITE message converted in step 414 to the IMS network via the P-CSCF 121. After sending the SIP INVITE message to the IMS network 120 via the P-CSCF 121, the call manager 113 operating with the MGCF function 330 waits for a response message to the SIP INVITE message from the P-CSCF 121. Although the process of waiting for a response message is omitted herein for convenience, this process can be automatically analogized according to the preceding/following steps.

If it is determined in step 416 that the message received from the P-CSCF 121 is a 200 OK message which is a response message to the INVITE transmitted to the P-CSCF 121, the call manager 113 operating with the MGCF function 330 performs, in step 418, interworking for sending the received SIP 200 OK message to the CS network 140. In step 420, the call manager 113 converts the message into an Answer Message (ANM)/Address Complete Message (ACM) message which is an ISUP/BICC message, and then switches to the MSC function 360. Upon receiving an ACM/ANM message in step 420, the call manager 113 operating with the MSC function 360 sends the ACM/ANM message to the MSC 141 of the CS network 140. Thereafter, the call manager 113 switches to a MSC2 mode (function).

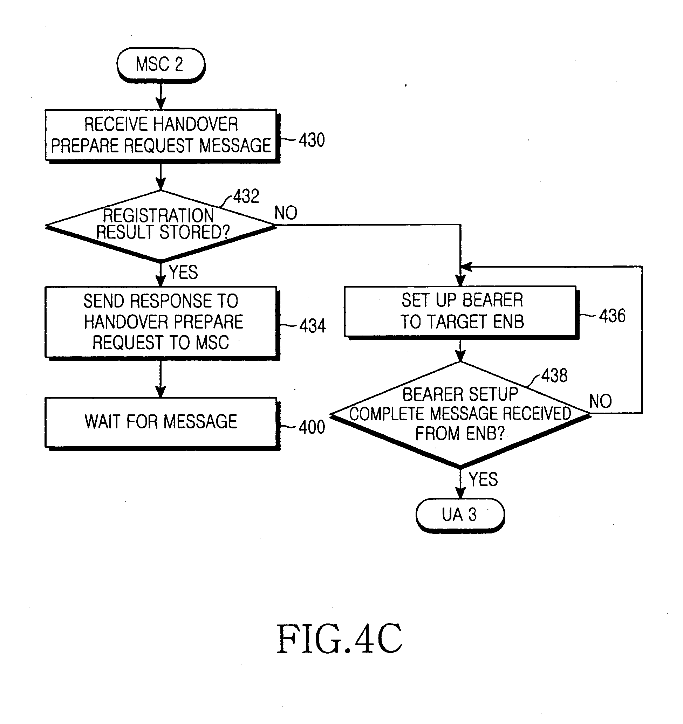

With reference to FIG. 4C, a description will now be made of an operation of the MSC2 mode of the call manager 113.

The call manager 113 operating with the MSC function 360 receives a handover prepare request message in step 430. Then the call manager 113 determines in step 432 whether IMS registration information for the terminal is stored therein. If it is determined in step 432 that the IMS registration information is stored, the call manager 113 proceeds to step 434. However, if the IMS registration information for the terminal is not stored in the call manager 113 operating with the MSC2 mode, the call manager 113 proceeds to step 436. In step 434, the call manager 113 sends a response message indicating the completed handover preparation, to the MSC 141 of the CS network 140. However, in step 436, the call manager 113 performs a process of establishing (setting up) a bearer to the target ENB. Thereafter, the call manager 113 determines in step 438 whether a bearer setup complete message is received. Upon receipt of the bearer setup complete message, the call manager 113 switches to a UA 3 mode.

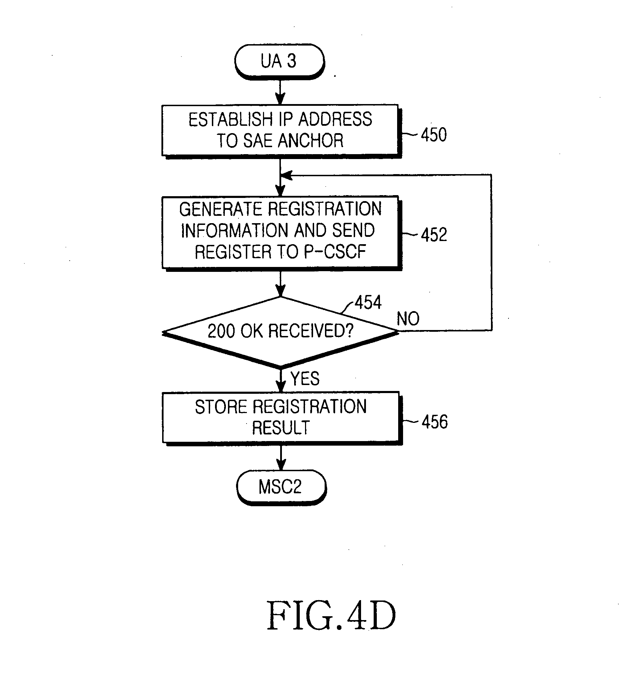

With reference to FIG. 4D, a description will now be made of an operation for the UA 3 mode in the call manager 113.

After switching to the UA function, the call manager 113 establishes an IP address to the SAE Anchor 114 in step 450, and generates, in step 452, registration information for performing IMS registration on behalf of the terminal, and sends a REGISTER message to the P-CSCF 121. The call manager 113 operating with the SIP UA mode waits for a response message to the IMS REGISTER message in step 454. Upon receiving a response message to the IMS REGISTER message in step 454, the call manager 113 stores the IMS registration result for the terminal on behalf of the terminal in step 456, and then switches to the MSC2 mode.

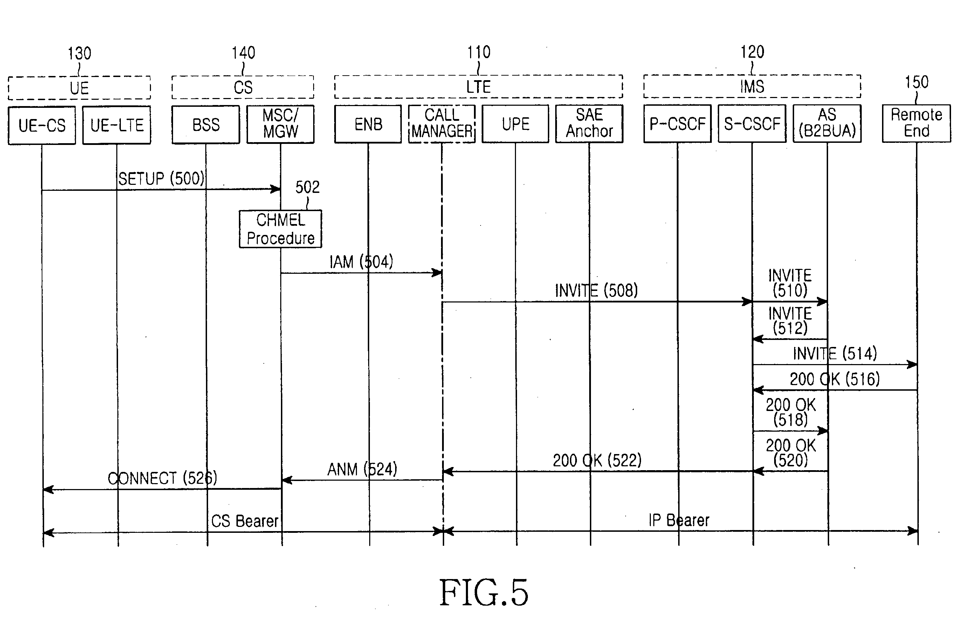

FIG. 5 is a signaling diagram of a process in which a terminal generates a CS call through a CS network according to an embodiment of the present invention. In FIG. 5, the nodes are equal to the nodes described in FIGs. 1 and 2, and the call manager has the structure of FIG. 3A and operates with the functions of FIG. 3B. The CS call is always switched to the IMS domain 120 and anchored in the AS 123.

In step 500, a UE-CS 131 of a terminal 130 sends a SETUP to an MSC 141 to make a CS call. In step 502, if the MSC 141 determines to anchor a call for the corresponding terminal in the IMS network based on the subscriber information of the terminal, the MSC 141 acquires routing information to the IMS network using a Customized Application of Mobile Enhanced Logic (CAMEL) procedure in order to acquire information for routing the call to the IMS network. The CAMEL procedure is assumed to use the existing technology defined by 3GPP, so a description thereof will be omitted herein. In step 504, the MSC 141 sends an ISUP IAM to a call manager using the routing information to the IMS network, obtained in step 502. At this point, the call manager switches to the MGCF function 330. Therefore, in step 508, the call manager operating with the MGCF function 330 converts the signal of the CS domain 140 into SIP INVITE, and sends it to an S-CSCF 122 to anchor the call in the AS 123. In step 510, upon receipt of the INVITE, the S-CSCF 122 forwards it to the AS 123. In step 512, upon receipt of the INVITE, the AS 123 performs an anchoring process and generates a new INVITE to be delivered to a called party based on the received INVITE information, and sends the generated INVITE to the S-CSCF 122. In step 514, upon receipt of the INVITE, the S-CSCF 122 forwards it to the called party or a receiver 150. In step 516, upon receipt of the INVITE, the receiver 150 sends a 200 OK in response thereto. This response is forwarded to the S-CSCF 122. The S-CSCF which has received INVITE in step 514 can be equal to or different from the S-CSCF which has received INVITE in step 508. In step 518, upon receipt of the 200 OK from the called party 150, the S-CSCF 122 forwards it to the AS 123. In step 520, upon receipt of the 200 OK, the AS 123 forwards the 200 OK to the S-CSCF 122 to forward it to the terminal 130. In step 522, upon receipt of the 200 OK, the S-CSCF 122 forwards the 200 OK to the call manager operating with the MGCF function 330. In step 524, upon receipt of the 200 OK, the call manager operating with the MGCF function 330 converts it into an ISUP/BICC ANM as a response to the ISUP/BICC IAM of step 504 and sends it to the MSC 141. In step 526, upon receipt of the ISUP ANM, the MSC 141 sends to the terminal 130 a CONNECT as a response to the SETUP of the terminal 130 in order to notify the completed connection setup. Through this process, a CS bearer is established between the call manager and the terminal, and an IP bearer is established between the call manager and the called-party terminal.

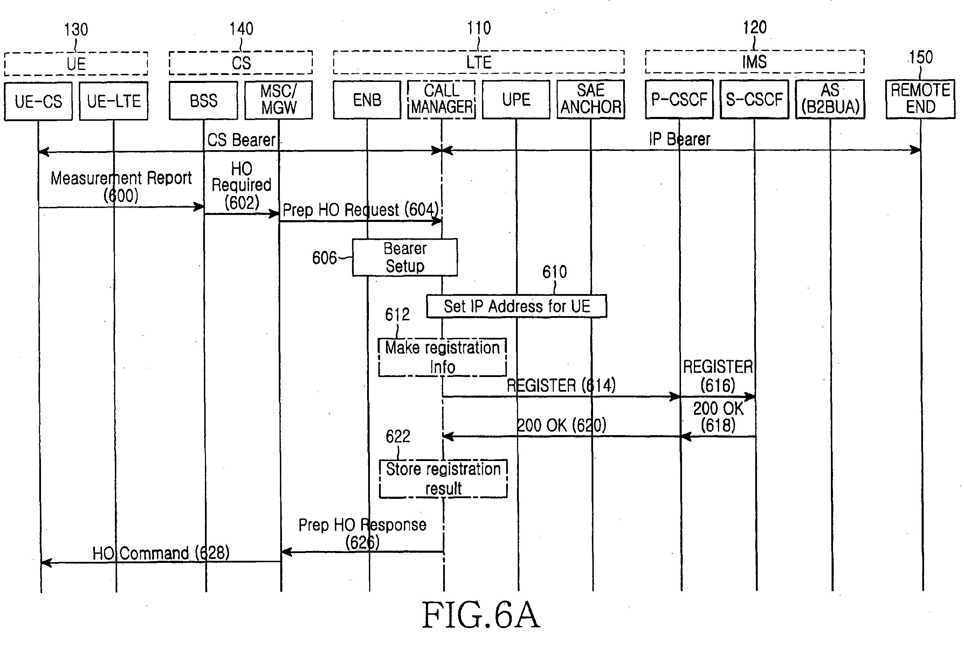

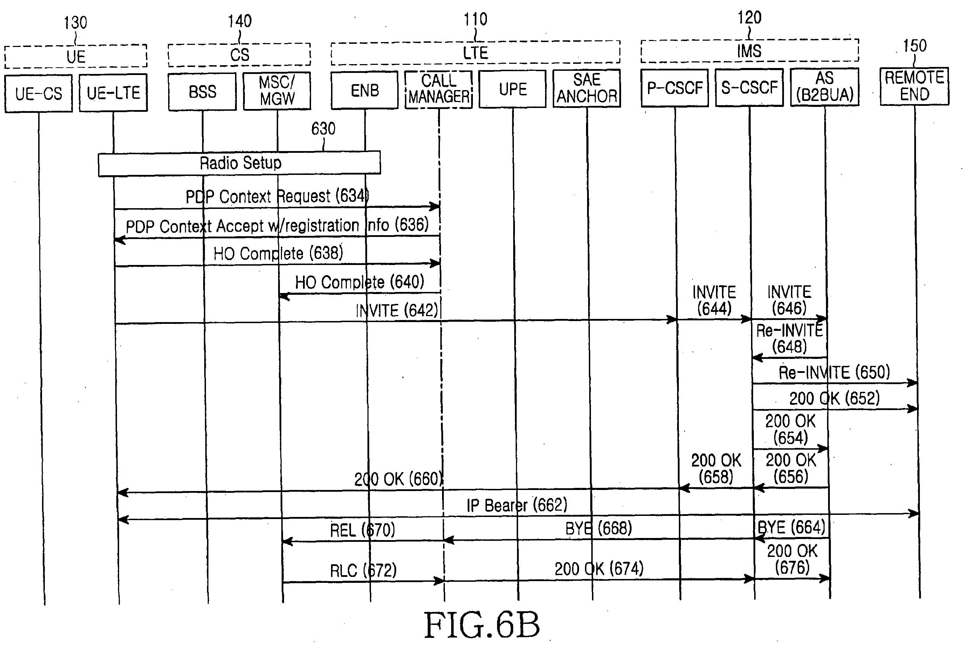

FIGs. 6A and 6B are signaling diagrams for handover from a CS call to an LTE/SAE VoIP call according to an embodiment of the present invention. Similarly, it is assumed in FIGs. 6A and 6B that the calling-party terminal is connected to the called party over a CS call. Before a detailed description of FIGs. 6A and 6B is given, according to the present invention, the call manager performing the UA function is assigned an IP address from the network entity in charge of IP address assignment in order to receive packet-based services on behalf of the terminal. In addition, the call manager performing the UA function performs an IMS registration process on behalf of the terminal using the assigned IP address. Although this is not needed in the existing CS network when the terminal moves from the GSM/WCDMA-based CS network to the LTE/SAE-based PS/IMS network, the call manager, on behalf of the terminal, previously perform a registration process to the IMS network necessary for receiving services in the PS/IMS network, thereby achieving the desired technical objects of the present invention. A detailed description thereof will be given below.

In step 600, a terminal 130 has a CS bearer established from the terminal 130 to a call manager operating with a MGW function 350, and a RTP/IP bearer established from the call manager operating with the MGW function 350 to a called party 150, both bearers being established through the process described in FIG. 5. In this state, the terminal 130 periodically measures signal strengths of neighbor base stations, and reports a status of the current radio to the radio network, e.g., BSS/RSS, which is the serving base station. This is shown in step 600 of FIG. 6A. In step 602, the radio network 143 determines whether the terminal 130 should perform handover, depending on the radio status information provided from the terminal 130. If it is determined that the corresponding terminal needs to perform handover to the LTE/SAE network, the radio network 143 sends a handover request message to the MSC 141 in step 602. The handover request message may include the following fields. The following exemplary fields of each message are given for convenience of description, and the fields are subject to adaptive addition/deletion/modification according to the system requirements.

Fields of Handover Request Message: Message Type, Cause, Cell Identifier List, Current channel type 1, Old BSS to New BSS Information, Source RNC to target RNC transparent information, and Speech version (Used).

Thereafter, in step 604, upon receipt of the handover request message, the MSC 141 sends a handover prepare request message to the handover-target call manager. The handover prepare request message may include the following fields.

Fields of Handover Prepare Request Message: Invoke Id, Target Cell Id, IMSI, Integrity Protection Information, Encryption Information, and Access Network-Application Packet Data Unit (AN-APDU).

Because the embodiment of the present invention considers handover from the CS call to the LTE/SAE call, the target base station is an ENB supporting the LTE/SAE call in the state where the CS call is established. Therefore, the MSC 141 should deliver the necessary information so that the ENB 111 included in the handover prepare request can allocate resources for the terminal. In step 606, upon receipt of the handover prepare request from the MSC 141, the call manager performs bearer establishment (setup) to the ENB based on the provided information. The ENB is assumed herein to be the ENB 111 shown in FIGs. 1 and 2. The bearer setup request message can be shown as follows. Since the shown message fields are based on the definition of WCDMA messages, their names are subject to change in LTE/SAE. Therefore, the present invention is based on the information included in the messages rather than the names thereof.

Fields of Bearer Setup Request Message: Message Type, Channel Type, Cause, Encryption Information, Classmark Information 1 or Classmark Information 2, Cell Identifier (Serving), Cell Identifier (Target), Current Channel Type 1, IMSI, Old RNC to new RNC information, Source RNC to target RNC transparent information (for UMTS), and Speech version (Used).

After completing the bearer establishment of step 606, the call manager switches to the SIP UA function 340. The bearer setup complete message may include the following fields.

Fields of Bearer Setup Complete Message: Message Type, Layer 3 Information, Chosen Channel, Chosen Encryption Algorithm, and Speech Version (Chosen).

In step 610, the call manager operating with the MME function 320 assigns an IP address to be used by the terminal 130 in cooperation with the SAE Anchor 114. This IP address is an address that the terminal will use later when staring to receive PS services after completing the handover. In step 612, the call manager generates information for IMS registration of the terminal. That is, the call manager generates IMPI and IMPU using the terminal's IMSI provided from the MSC 141. In step 614, the call manager operating with the SIP UA function 340 performs IMS registration of the terminal on behalf of the terminal. For this, the call manager operating with the SIP UA function 340 sends an SIP REGISTER request to the P-CSCF 121 based on the information generated in step 612. This is a process of registering the terminal in IMS according to the normal registration process. In step 616, upon receipt of an IMS registration request, the P-CSCF 121 sends an SIP REGISTER request to the S-CSCF 122.

In step 618, upon receipt of the SIP REGISTER request, the S-CSCF 122 sends a 183 Session Progress/200 OK to the P-CSCF 121 in response thereto. In step 620, upon receipt of the 183 Session Progress/200 OK, the P-CSCF 121 sends a 200 OK to the call manager. In step 622, the call manager stores the result obtained by registering the terminal in the IMS. The stored result may include IP address, P-CSCF address, and S-CSCF address of the terminal.

In step 626, the call manager switches to the MSC function and sends a handover prepare complete message to the MSC 141. The handover prepare complete message may include the following fields.

Fields of Handover Prepare Complete Message: Invoke ID, Handover Number, AN-APDU, and Chosen Radio Resource Information.

After performing the above process, the MSC 141 sends a handover command to the terminal via the BSS 143 in step 628. In step 630, upon receipt of the handover command, the terminal switches its radio to LTE/SAE and makes radio establishment (setup) to the ENB 111.

After completing the radio setup, the terminal 130 sends a PDP Context request to the call manager to receive a PS service in step 634. In step 636, the call manager sends a PDP Context Accept message in response to the PDP Context request from the terminal. In this case, the call manager sends IMS registration information of the terminal together with the PDP Context Accept message. The information transmitted to the terminal includes IP address, P-CSCF address, and S-CSCF address of the terminal, and this is included in an additional parameter list of Protocol Configuration Options. A new container identifier is defined for an S-CSCF address among them. After completing this process, the terminal performs no separate registration process, recognizing that it is registered in the IMS. The process in which the call manager delivers the IMS registration information to the terminal is possible not only through the PDP Context Activation process but also through other messages.

After this process is completed, the terminal sends in step 638 a handover complete message to the call manager via the ENB 111. In step 640, the call manager forwards the handover complete message of step 638 to the MSC 141 so that the MSC 141 can release the resources used by the terminal.

Thereafter, in step 642, the terminal sends an INVITE request to the AS 123 in order to establish a new LTE/SAE VoIP session. This request is sent from the terminal to the P-CSCF 121 in order to be delivered to the AS 123. In steps 644 and 646, the INVITE request is forwarded to the AS 123 via the P-CSCF 121 and the S-CSCF 122.

In step 648, the AS 123 delivers a Re-INVITE request to the S-CSCF 122 in order to send the Re-INVITE request to the receiver 150. In step 650, the S-CSCF 122 forwards the Re-INVITE request from the AS 123 to the receiver 150. Upon receipt of the request, the receiver 150 updates the session and then sends a 183 Session Progress/200 OK to the S-CSCF 122 in response to the Re-INVITE request in step 652. In step 654, the S-CSCF 122 forwards the 183 Session Progress/200 OK to the AS 123. In steps 656 through 660, the 183 Session Progress/200 OK sent by the AS 123 is forwarded to the terminal 130 via the S-CSCF 122 and the P-CSCF 121, establishing a new LTE/SAE VoIP session. Therefore, in step 662, an RTP/IP bearer is established between the calling terminal 130 and the receiver 150.

In step 664 which corresponds to the process of releasing the existing CS call, the AS 123 sends a BYE to the S-CSCF 122 to release the CS call. In step 668, upon receipt of the BYE from the AS 123, the S-CSCF 122 forwards the BYE to the call manager operating with the MGCF function 330. In step 670, upon receipt of the BYE, the call manager operating with the MGCF function 330 sends an ISUP REL message to the MSC 141 to release the existing CS call. In step 672, upon receipt of the REL message, the MSC 141 sends an ISUP RLC message to the call manager operating with the MGCF function 330 in response thereto. In step 674, upon receipt of the ISUP RLC, the call manager operating with the MGCF function 330 converts it into a 200 OK, and sends the 200 OK to the S-CSCF 122. In step 676, upon receipt of the 200 OK, the S-CSCF 122 forwards it to the AS 123, completing the release of CS resources.

As is apparent from the foregoing description, the present invention can provide handover without a call drop when it is not possible to simultaneously access two radio signals in the LTE/SAE system and the CS system. In this manner, it is possible to provide higher-quality services to the users.

While the invention has been shown and described with reference to a certain preferred embodiment thereof, it will be understood by those skilled in the art that various changes in form and details may be made therein without departing from the scope of the invention as defined by the appended claims.

## Claims

1. A handover method between heterogeneous networks, in which a call manager (113) of a network having a Circuit Switching, CS, network (140) supporting a CS call, a Long Term Evolution, LTE, network (110) supporting a packet call, and an Internet Protocol Multimedia Subsystem, IMS, network (120) for anchoring a call, provides handover from the CS network (140) to the LTE network (110) to a terminal (130) that uses one radio channel and can access either the CS network (140) or the LTE network (110), the method comprising:
establishing (606) at the call manager (113) a bearer to a base station (111) of the LTE network (110) upon receiving (604) at the call manager (113) a handover request to the base station (111) of the LTE network (110) from the terminal (130) via a node (141) of the CS network (140);
receiving (610) at the call manager (113) an assigned IP address that the terminal (130) will use in the LTE network (110), storing (612) at the call manager (113) information on the terminal (110), and then registering (614) at the call manager (113) the terminal (130) in the IMS network (120); and
storing (622) at the call manager (113) the registration result, and sending (626) a handover response signal from the call manager (113) to the terminal (130) via the CS network (140) so that the terminal (130) performs handover from the CS network (140) to the LTE network (110).

2. The handover method of claim 1, wherein the handover request is achieved by receiving (604) at the call manager (113) a handover prepare request message for the handover from the CS network (140) to the LTE network (110);
wherein the handover prepare request message comprises fields of Invoke Id, Target Cell Id, IMSI, Integrity Protection Information, Encryption Information, and Access Network-Application Packet Data Unit, AN-APDU.

3. The handover method of claim 1, wherein establishing (606) at the call manager (113) a bearer to a base station (111) of the LTE network (110) comprises:
sending a bearer setup request message to the base station (111) of the LTE network (110); and
receiving a bearer setup complete message from the base station (111) of
rk the LTE network (110).

4. The handover method of claim 3, wherein the bearer setup request message comprises fields of Message Type, Channel Type, Cause, Encryption Information, Classmark Information 1 or Classmark Information 2, Serving Cell Identifier, Target Cell Identifier, Current Channel Type 1, IMSI, Old RNC to new RNC information, Source RNC to target RNC transparent information for UMTS, and Used Speech version.

5. The handover method of claim 3, wherein the bearer setup complete message comprises fields of Message Type, Layer 3 Information, Chosen Channel, Chosen Encryption Algorithm, and Chosen Speech Version.

6. The handover method of claim 1, wherein performing handover comprises:
upon receipt (634) at the call manager (113) of a Packet Data Protocol, PDP, context request from the terminal (130), sending (636) a PDP context accept message including IMS registration information from the call manager (113) to the terminal (130); and
upon receipt (638) at the call manager (113) of a handover complete message from the terminal (130), forwarding (640) the handover complete message from the call manager (113) to the CS network (140).

7. The handover method of claim 1, the method further comprising:
switching at the terminal (130) the radio channel to the LTE network (110) and establishing (630) at the terminal (130) a radio channel to the base station (111) of the LTE network (110) upon receiving (628) at the terminal (130) a handover command to handover to the base station (111) of the LTE network (110) after providing (600) from the terminal (130) a signal strength of a signal received from a base station (143) of the CS network (140) in communication with the terminal (130);
after completion of the radio establishment, sending (634) from the terminal (130) a PDP context request to the call manager (113) of the LTE network (110), receiving (636) at the terminal (130) a Packet Data Protocol, PDP, context accept message including IMS registration information, and storing at the terminal (130) the PDP context accept message; and
sending (642) from the terminal (130) to the IMS network (120) an INVITE for requesting a connection to another party's terminal (150) to perform handover.

8. The handover method of claim 7, further comprising:
upon receipt (636) at the terminal (130) of the PDP context accept message, sending (638) a handover complete message from the terminal (130) to the call manager (113).

9. A call management system for providing handover from a Circuit Switching, CS, network (140) to a Long Term Evolution, LTE, network (110) by a terminal (130) in a network, the terminal (130) having one radio channel such that the terminal (130) can access either the CS network (140) or the LTE network (110), the CS network (140) being adapted to support a CS call, the LTE network (110) being adapted to support a packet call, and an Internet Protocol Multimedia Subsystem, IMS, network (120) being adapted to anchor a call, the system comprising:
a first interface (312) adapted to exchange data and a control signal with the CS network (140);
a second interface (313) adapted to exchange data and a control signal with the LTE network (110);
a third interface (314) adapted to exchange data and a control signal with the IMS network (120); and
a controller (311) adapted to establish (606) a bearer to a base station (111) of the LTE network (110) using the second interface (313) upon receiving (604) a handover request to the base station (111) of the LTE network (110) from the terminal (130) via the first interface (312); adapted to receive (610) an assigned IP address of the terminal (130) via a System Architecture Evolution, SAE, anchor (114) of the LTE network (110), store (612) information on the terminal (130), and then register (614) the terminal (130) in the IMS network (120); and adapted to store (622) the registration result, and send (626) a handover response signal to the terminal (130) via the first interface (312).

10. The call management system of claim 9, wherein the handover request is achieved by the first interface (312) being adapted to receive (604) a handover prepare request message for the handover from the CS network (140) to the LTE network (110);
wherein the handover prepare request message comprises fields of Invoke Id, Target Cell Id, IMSI, Integrity Protection Information, Encryption Information, and Access Network-Application Packet Data Unit, AN-APDU.

11. The call management system of claim 10, wherein to establish (606) a bearer to a base station (111) of the LTE network (110), the controller (311) is adapted to send a bearer setup request message to the base station (111) of the LTE network (110) via the second interface (313), and adapted to receive a bearer setup complete message from the base station (111) of the LTE network (110) via the second interface (313).

12. The call management system of claim 11, wherein the bearer setup request message comprises fields of Message Type, Channel Type, Cause, Encryption Information, Classmark Information 1 or Classmark Information 2, Serving Cell Identifier, Target Cell Identifier, Current Channel Type 1, IMSI, Old RNC to new RNC information, Source RNC to target RNC transparent information for UMTS, and Used Speech version.

13. The call management system of claim 11, wherein the bearer setup complete message comprises fields of Message Type, Layer 3 Information, Chosen Channel, Chosen Encryption Algorithm, and Chosen Speech Version.

## Patentansprüche

1. Übergabeverfahren zwischen heterogenen Netzen, bei dem ein Call-Manager (113) eines Netzes mit einem CS-Anrufe unterstützenden CS-(Circuit Switching)-Netz (140), einem Paketanrufe unterstützenden LTE-(Long Term Evolution)-Netz (110) und einem IMS-(Internet Protocol Multimedia Subsystem)-Netz (120) zum Verankern von Anrufen eine Übergabe vom CS-Netz (140) zum LTE-Netz (110) zu einem Endgerät (130) bewirkt, das einen Funkkanal benutzt und entweder auf das CS-Netz (140) oder das LTE-Netz (110) zugreifen kann, wobei das Verfahren Folgendes beinhaltet:
Aufbauen (606), am Call-Manger (113), eines Trägers zu einer Basisstation (111) des LTE-Netzes (110) nach dem Empfang (604), am Call-Manager (113), einer Übergabeanforderung zur Basisstation (111) des LTE-Netzes (110) vom Endgerät (130) über einen Knoten (141) des CS-Netzes (140);
Empfangen (610) einer zugeordneten IP-Adresse am Call-Manager (113), die das Endgerät (130) im LTE-Netz (110) benutzt, Speichern (612) von Informationen über das Endgerät (110) am Call-Manager (113) und dann Registrieren (614) des Endgeräts (130) im IMS-Netz (120) am Call-Manager (113); und
Speichern (622) des Registrationsergebnisses am Call-Manager (113) und Senden (626) eines Übergabeantwortsignals vom Call-Manager (113) zum Endgerät (130) über das CS-Netz (140), so dass das Endgerät (130) eine Übergabe vom CS-Netz (140) zum LTE-Netz (110) durchführt.

2. Übergabeverfahren nach Anspruch 1, wobei die Übergabeanforderung durch Empfangen (604) einer Übergabevorbereitungsanforderungsnachricht am Call-Manager (113) für die Übergabe vom CS-Netz (140) zum LTE-Netz (110) erzielt wird;
wobei die Übergabevorbereitungsanforderungsnachricht die folgenden Felder beinhaltet: Invoke Id, Target Cell Id, IMSI, Integrity Protection Information, Encryption Information und AN-APDU (Access Network-Application Packet Data Unit).

3. Übergabeverfahren nach Anspruch 1, wobei das Aufbauen (606) eines Trägers zu einer Basisstation (111) des LTE-Netzes (110) am Call-Manager (113) Folgendes beinhaltet:
Senden einer Träger-Setup-Anforderungsnachricht zur Basisstation (111) des LTE-Netzes (110); und
Empfangen einer Träger-Setup-vollendet-Nachricht von der Basisstation (111) des LTE-Netzes (110).

4. Übergabeverfahren nach Anspruch 3, wobei die Träger-Setup-Anforderungsnachricht die folgenden Felder beinhaltet: Message Type, Channel Type, Cause, Encryption Information, Classmark Information 1 oder Classmark Information 2, Serving Cell Identifier, Target Cell Identifier, Current Channel Type 1, IMSI, Old RNC to new RNC Information, Source RNC to target RNC transparent information for UMTS, und Used Speech Version.

5. Übergabeverfahren nach Anspruch 3, wobei die Träger-Setup-vollendet-Nachricht die folgenden Felder beinhaltet: Message Type, Layer 3 Information, Chosen Channel, Chosen Encryption Algorithm und Chosen Speech Version.

6. Übergabeverfahren nach Anspruch 1, wobei das Durchführen der Übergabe Folgendes beinhaltet:
Senden (636), nach dem Empfang (634) einer PDP-(Packet Data Protocol)-Kontextanforderung vom Endgerät (130) am Call-Manager (113), einer PDP-Kontextakzeptanznachricht mit IMS-Registrationsinformationen vom Call-Manager (113) zum Endgerät (130); und
Weiterleiten (640), nach dem Empfang (638) einer Übergabe-komplett-Nachricht vom Endgerät (130) am Call-Manager (113), der Übergabe-komplett-Nachricht vom Call-Manager (113) zum CS-Netz (140).

7. Übergabeverfahren nach Anspruch 1, wobei das Verfahren ferner Folgendes beinhaltet:
Umschalten des Funkkanals auf das LTE-Netz (110) am Endgerät (130) und Aufbauen (630) eines Funkkanals zur Basisstation (111) des LTE-Netzes (110) am Endgerät (130) nach dem Empfang (628) eines Übergabebefehls zum Übergeben zur Basisstation (111) des LTE-Netzes (110) am Endgerät (130) nach dem Bereitstellen (600) einer Signalstärke eines von einer Basisstation (143) des CS-Netzes (140) in Kommunikation mit dem Endgerät (130) empfangenen Signals vom Endgerät (130);
Senden (634), nach Vollendung des Funkaufbaus, einer PDP-Kontextanforderung vom Endgerät (130) zum Call-Manager (113) des LTE-Netzes (110), Empfangen (636) einer PDP-(Packet Data Protocol)-Kontextakzeptanznachricht mit IMS-Registrationsinformationen am Endgerät (130) und Speichern der PDP-Kontextakzeptanznachricht am Endgerät (130); und
Senden (642) einer INVITE zum Anfordern einer Verbindung zum Endgerät (150) einer anderen Partei zum Durchführen einer Übergabe vom Endgerät (130) zum IMS-Netz (120).

8. Übergabeverfahren nach Anspruch 7, das ferner Folgendes beinhaltet:
Senden (638), nach dem Empfang (636) der PDP-Kontextakzeptanznachricht am Endgerät (130), einer Übergabe-vollendet-Nachricht vom Endgerät (130) zum Call-Manager (113).

9. Call-Managementsystem zum Bereitstellen einer Übergabe von einem CS-(Circuit Switching)-Netz (140) zu einem LTE-(Long Term Evolution)-Netz (110) durch ein Endgerät (130) in einem Netzwerk, wobei das Endgerät (130) einen Funkkanal hat, so dass das Endgerät (130) entweder auf das CS-Netz (140) oder auf das LTE-Netz (110) zugreifen kann, wobei das CS-Netz (140) so ausgelegt ist, dass es einen CS-Anruf unterstützt, wobei das LTE-Netz (110) so ausgelegt ist, dass es einen Paketanruf unterstützt, und wobei ein IMS-(Internet Protocol Multimedia Subsystem)-Netz (120) so ausgelegt ist, dass es einen Anruf verankert, wobei das System Folgendes umfasst:
eine erste Schnittstelle (312) zum Austauschen von Daten und eines Steuersignals mit dem CS-Netz (140);
eine zweite Schnittstelle (313) zum Austauschen von Daten und eines Steuersignals mit dem LTE-Netz (110);
eine dritte Schnittstelle (314) zum Austauschen von Daten und eines Steuersignals mit dem IMS-Netz (10); und
eine Steuerung (311) zum Aufbauen (606) eines Trägers zu einer Basisstation (111) des LTE-Netzes (110) unter Verwendung der zweiten Schnittstelle (313) nach dem Empfang (604) einer Übergabeanforderung zur Basisstation (111) des LTE-Netzes (110) von dem Endgerät (130) über die erste Schnittstelle (312); ausgelegt zum Empfangen (610) einer zugeordneten IP-Adresse des Endgeräts (130) über einen SAE-(System Architecture Evolution)-Anker (114) des LTE-Netzes (110), Speichern (612) von Informationen über das Endgerät (130) und dann Registrieren (614) des Endgeräts (130) im IMS-Netz (120); und ausgelegt zum Speichern (622) des Registrationsergebnisses und zum Senden (626) eines Übergabeantwortsignals zum Endgerät (130) über die erste Schnittstelle (312).

10. Call-Managementsystem nach Anspruch 9, wobei die Übergabeanforderung durch die erste Schnittstelle (312) erzielt wird, die zum Empfangen (604) einer Übergabevorbereitungsanforderungsnachricht für die Übergabe vom CS-Netz (140) zum LTE-Netz (110) ausgelegt ist;
wobei die Übergabevorbereitungsanforderungsnachricht die folgenden Felder beinhaltet: Invoke Id, Target Cell Id, IMSI, Integrity Protection Information, Encryption Information und AN-APDU (Access Network-Application Packet Data Unit).

11. Call-Managementsystem nach Anspruch 10, wobei zum Aufbauen (606) eines Trägers zu einer Basisstation (111) des LTE-Netzes (110) die Steuerung (311) zum Senden einer Träger-Setup-Anforderungsnachricht zur Basisstation (111) des LTE-Netzes (110) über die zweite Schnittstelle (313) ausgelegt ist und zum Empfangen einer Träger-Setup-vollendet-Nachricht von der Basisstation (111) des LTE-Netzes (110) über die zweite Schnittstelle (313) ausgelegt ist.

12. Call-Managementsystem nach Anspruch 11, wobei die Träger-Setup-Anforderungsnachricht die folgenden Felder beinhaltet: Message Type, Channel Type, Cause, Encryption Information, Classmark Information 1 oder Classmark Information 2, Serving Cell Identifier, Target Cell Identifier, Current Channel Type 1, IMSI, Old RNC to new RNC information, Source RNC to target RNC transparent information for UMTS, und Used Speech Version.

13. Call-Managementsystem nach Anspruch 11, wobei die Träger-Setup-vollendet-Nachricht die folgenden Felder beinhaltet: Message Type, Layer 3 Information, Chosen Channel, Chosen Encryption Algorithm und Chosen Speech Version.

## Revendications

1. Procédé de transfert entre des réseaux hétérogènes, dans lequel un gestionnaire d'appels (113) d'un réseau possédant un réseau à commutation de circuits, CS (140), supportant un appel CS, un réseau de technologie d'évolution à long terme, LTE (110), supportant un appel en mode paquets, et un réseau à sous-système multimédia à protocole internet, IMS (120), pour assurer l'ancrage d'un appel, procure un transfert à partir du réseau CS (140) vers le réseau LTE (110) à un terminal (130) qui utilise un canal radio et peut accéder soit au réseau CS (140) soit au réseau LTE (110), le procédé comprenant les opérations consistant à :
établir (606), au niveau du gestionnaire d'appels (113), un support vers une station de base (111) du réseau LTE (110) lors de la réception (604), au niveau du gestionnaire d'appels (113), d'une demande de transfert vers la station de base (111) du réseau LTE (110) laquelle provient du terminal (130) par l'intermédiaire d'un noeud (141) du réseau CS (140) ;
recevoir (610), au niveau du gestionnaire d'appels (113), une adresse IP attribuée que le terminal (130) va utiliser dans le réseau LTE (110), stocker (612) au niveau du gestionnaire d'appels (113) des informations sur le terminal (110), et puis inscrire (614) au niveau du gestionnaire d'appels (113) le terminal (130) auprès du réseau IMS (120) ; et
stocker (622), au niveau du gestionnaire d'appels (113), le résultat de l'inscription, et envoyer (626) un signal de réponse de transfert à partir du gestionnaire d'appels (113) vers le terminal (130) par l'intermédiaire du réseau CS (140) de sorte que le terminal (130) réalise le transfert à partir du réseau CS (140) vers le réseau LTE (110).

2. Procédé de transfert selon la revendication 1, la demande de transfert étant accomplie suite à la réception (604), au niveau du gestionnaire d'appels (113), d'un message de demande de préparation au transfert pour assurer le transfert à partir du réseau CS (140) vers le réseau LTE (110) ;
cas dans lequel le message de demande de préparation au transfert comprend les champs suivants, à savoir : Id de sollicitation, Id de cellule-cible, IMSI, Informations de protection de l'intégrité, Informations de Chiffrement, et Unité de données en mode paquets de l'application-Accès au réseau, AN-APDU.

3. Procédé de transfert selon la revendication 1, l'établissement (606) au niveau du gestionnaire d'appels (113) d'un support vers une station de base (111) du réseau LTE (110) comprenant les opérations consistant à :
envoyer un message de demande de configuration du support vers la station de base (111) du réseau LTE (110) ; et
recevoir un message d'achèvement de configuration du support à partir de la station de base (111) du réseau LTE (110).

4. Procédé de transfert selon la revendication 3, le message de demande de configuration du support comprenant les champs suivants, à savoir : Type de Message, Type de Canal, Cause, Informations de Chiffrement, Informations de Marque de classe 1 ou Informations de Marque de classe 2, Identifiant de cellule de desserte, Identifiant de cellule-cible, Canal actuel type 1, IMSI, Informations de l'ancien RNC vers le nouveau RNC, Informations de transparence du RNC source vers le RNC cible pour l'UMTS, et Version vocale utilisée.

5. Procédé de transfert selon la revendication 3, le message d'achèvement de configuration du support comprenant les champs suivants, à savoir : Type de Message, Informations de couche 3, Canal choisi, Algorithme de chiffrement choisi, et Version vocale choisie.

6. Procédé de transfert selon la revendication 1, la réalisation du transfert comprenant les opérations consistant à :
lors de la réception (634), au niveau du gestionnaire d'appels (113), d'une demande de contexte du protocole de paquets de données, PDP, en provenance du terminal (130), envoyer (636) un message d'acceptation de contexte PDP, englobant des informations d'inscription IMS à partir du gestionnaire d'appels (113) vers le terminal (130) ; et
lors de la réception (638), au niveau du gestionnaire d'appels (113) d'un message d'achèvement de transfert à partir du terminal (130), réacheminer (640) le message d'achèvement de transfert à partir du gestionnaire d'appels (113) vers le réseau CS (140).

7. Procédé de transfert selon la revendication 1, le procédé comprenant en outre les opérations consistant à :
commuter, au niveau du terminal (130), le canal radio vers le réseau LTE (110) et établir (630), au niveau du terminal (130), un canal radio vers la station de base (111) du réseau LTE (110) lors de la réception (628) au niveau du terminal (130) d'une instruction de transfert visant à opérer le transfert vers la station de base (111) du réseau LTE (110) après avoir obtenu (600), à partir du terminal (130), une intensité de signal relative à un signal reçu à partir d'une station de base (143) du réseau CS (140) en communication avec le terminal (130) ;
après avoir achevé l'établissement radio, envoyer (634) à partir du terminal (130) une demande de contexte PDP au gestionnaire d'appels (113) du réseau LTE (110), recevoir (636) au niveau du terminal (130) un message d'acceptation de contexte du protocole de paquets de données, PDP, englobant des informations d'inscription IMS, et stocker, au niveau du terminal (130), le message d'acceptation de contexte PDP ; et
envoyer (642), à partir du terminal (130) vers le réseau IMS (120), une INVITE pour demander une connexion vers le terminal d'un autre abonné (150) afin de réaliser le transfert.

8. Procédé de transfert selon la revendication 7, comprenant en outre l'opération consistant à :
lors de la réception (636) au niveau du terminal (130) du message d'acceptation de contexte PDP, envoyer (638) un message d'achèvement de transfert à partir du terminal (130) vers le gestionnaire d'appels (113).

9. Système de gestion d'appels pour procurer un transfert à partir d'un réseau à commutation de circuits, CS (140), vers un réseau de technologie d'évolution à long terme, LTE (110), par un terminal (130) dans un réseau, le terminal (130) ayant un canal radio de telle sorte que le terminal (130) puisse accéder soit au réseau CS (140) soit au réseau LTE (110), le réseau CS (140) étant conçu pour supporter un appel CS, le réseau LTE (110) étant conçu pour supporter un appel en mode paquets, et un réseau à sous-système multimédia à protocole internet, IMS (120) étant conçu pour assurer l'ancrage d'un appel, le système comprenant :
une première interface (312) conçue pour échanger des données et un signal de commande avec le réseau CS (140) ;
une deuxième interface (313) conçue pour échanger des données et un signal de commande avec le réseau LTE (110) ;
une troisième interface (314) conçue pour échanger des données et un signal de commande avec le réseau IMS (120) ; et
un contrôleur (311) conçu pour établir (606) un support vers une station de base (111) du réseau LTE (110) grâce à l'utilisation de la deuxième interface (313) lors de la réception (604) d'une demande de transfert vers la station de base (111) du réseau LTE (110) laquelle provient du terminal (130) par l'intermédiaire de la première interface (312) ; conçu pour recevoir (610) une adresse IP attribuée du terminal (130) par l'intermédiaire de l'ancrage (114) de l'évolution de l'architecture de système, SAE, du réseau LTE (110), pour stocker (612) des informations sur le terminal (130), et puis inscrire (614) le terminal (130) auprès du réseau IMS (120) ; et conçu pour stocker (622) le résultat de l'inscription, et envoyer (626) un signal de réponse de transfert vers le terminal (130) par l'intermédiaire de la première interface (312).

10. Système de gestion d'appels selon la revendication 9, la demande de transfert étant accomplie par la première interface (312) laquelle est conçue pour recevoir (604) un message de demande de préparation au transfert pour assurer le transfert à partir du réseau CS (140) vers le réseau LTE (110) ;
cas dans lequel le message de demande de préparation au transfert comprend les champs suivants, à savoir : Id de sollicitation, Id de cellule-cible, IMSI, Informations de protection de l'intégrité, Informations de Chiffrement, et Unité de données en mode paquets de l'application-Accès au réseau, AN-APDU.

11. Système de gestion d'appels selon la revendication 10, pour établir (606) un support vers une station de base (111) du réseau LTE (110), le contrôleur (311) étant conçu pour envoyer un message de demande de configuration du support vers la station de base (111) du réseau LTE (110) par l'intermédiaire de la deuxième interface (313), et étant conçu pour recevoir un message d'achèvement de configuration du support à partir de la station de base (111) du réseau LTE (110) par l'intermédiaire de la deuxième interface (313).

12. Système de gestion d'appels selon la revendication 11, le message de demande de configuration du support comprenant les champs suivants, à savoir :
Type de Message, Type de Canal, Cause, Informations de Chiffrement, Informations de Marque de classe 1 ou Informations de Marque de classe 2, Identifiant de cellule de desserte, Identifiant de cellule-cible, Canal actuel type 1, IMSI, Informations de l'ancien RNC vers le nouveau RNC, Informations de transparence du RNC source vers le RNC cible pour l'UMTS, et Version vocale utilisée.

13. Système de gestion d'appels selon la revendication 11, le message d'achèvement de configuration du support comprenant les champs suivants, à savoir : Type de Message, Informations de couche 3, Canal choisi, Algorithme de chiffrement choisi, et Version vocale choisie.
